# EUROPÄISCHE PATENTANMELDUNG

(11) **EP 3 730 431 A1**
(43) Veröffentlichungstag der Anmeldung: **28.10.2020**
(21) Anmeldenummer: 19171152.2
(22) Anmeldetag: 25.04.2019
(51) Int. Cl.: B65G 47/86

(54) **NOCKENSTEUERWELLE ZUR VERWENDUNG ALS ÖFFNUNGS- ODER SCHLIESSMITTEL IN EINER GREIFEINRICHTUNG SOWIE GREIFEINRICHTUNG UND TRANSPORTVORRICHTUNG MIT EINER DERARTIGEN NOCKENSTEUERWELLE**

(71) Anmelder: Tyrolon-Schulnig GmbH, 6395 Hochfilzen (AT)
(72) Erfinder: SCHULNIG, Elmar, 6392 St. Jakob i.H. (AT)
(74) Vertreter: Rupprecht, Kay

(57) **Zusammenfassung**

Die Erfindung betrifft eine Nockensteuerwelle zur Verwendung als Öffnungs- oder Schließmittel in einer Greifeinrichtung zum Greifen, Halten und Führen von insbesondere flaschenartigen Behältern. Die Nockensteuerwelle weist einen nockenförmigen Steuerabschnitt (6), einen mittleren Lagerabschnitt, und einen Betätigungsabschnitt auf, wobei der Steuerabschnitt und der Lagerabschnitt auf einer Drehachse liegen. Um die Abnutzung der Nockensteuerwelle zu reduzieren, weist der Betätigungsabschnitt einen Hebel (7) und eine Betätigungsrolle (8) auf, wobei die Betätigungsrolle (8) durch den Hebel (7) zur Drehachse beabstandet angeordnet ist.

Zusätzlich bezieht sich die Erfindung auf eine Greifeinrichtung und eine Transportvorrichtung mit einer derartigen Nockensteuerwelle.

## Beschreibung

Die Erfindung betrifft eine Nockensteuerwelle zur Verwendung als Öffnungs- oder Schließmittel in einer Greifeinrichtung sowie eine Greifeinrichtung und eine Transportvorrichtung mit einer derartigen Nockensteuerwelle. Die Greifeinrichtung und die Transportvorrichtung dienen insbesondere zum Greifen, Halten und Führen von Behältern, insbesondere von flaschenähnlichen Behältern.

Transportvorrichtungen zum Greifen, Halten und/oder Führen von Behältern sind bereits aus dem Stand der Technik bekannt, insbesondere unter dem Namen "Klammerstern". Sie werden vornehmlich bei der fließbandtechnischen Bearbeitung von Behältern bzw. Behältnissen verwendet, die insbesondere zur Befüllung mit Flüssigkeiten oder anderweitigem Schüttgut vorgesehen sind.

Unter dem Begriff "Behälter" sind im Sinne der vorliegenden Erfindung insbesondere Behälter bzw. Behältnisse zur Aufnahme bzw. zum Transport von Flüssigkeiten oder anderem Schüttgut zu verstehen. Verschiedene Typen von Behältern können sich unter anderem in ihrer Formgebung, ihrem maximalen Füllvolumen und ihrem Werkstoff wie Glas, Kunststoff oder Metall unterscheiden. Die Transportvorrichtungen werden unter anderem in einem Prozessablauf zum Reinigen, Befüllen und Etikettieren von Behältern verwendet, in denen die Transportvorrichtungen örtlich positioniert und justiert werden müssen, um die Behälter von Förderbändern aufzunehmen und diese zur nächsten Arbeitsstation wie z.B. einer Abfüll-, Reinigungs- oder Etikettieranlage zu transportieren. Hierzu weisen die Transportvorrichtungen Greifeinrichtungen zum Greifen, Halten und/oder Führen von insbesondere flaschenartigen Behältern auf. Eine derartige Greifeinrichtung besitzt wenigstens ein Greifarmpaar aus zwei, insbesondere gegengleich ausgebildeten Greifarmen und kann zwischen einer Greifstellung und einer Öffnungsstellung wechseln. Um einen Behälter zu transportieren, greifen die Greifarme normalerweise unterhalb des Halskragens oder um den Bauch des Behälters. Eine Nockensteuerwelle fungiert hierfür als Öffnungsmittel und beispielsweise eine Spiralfeder oder ein Magnetpaar als Schließmittel der Greifeinrichtung, oder umgekehrt. Dabei wird die Nockensteuerwelle der Greifeinrichtung über ein Betätigungsmittel angesteuert, mit dessen Hilfe die Greifeinrichtung geöffnet und geschlossen werden kann.

Die Transportvorrichtungen werden normalerweise konzentrisch auf einem kreisrunden Trägerring um die Antriebsachse bzw. Antriebswelle der Transportvorrichtung positioniert und befestigt. Dadurch wird sichergestellt, dass nach einer bestimmten Rotationsbewegung des Trägerrings die gleiche oder eine andere Greifvorrichtung wieder an eine selbe oder eine vorbestimmte Position gelangt, an der die Greifeinrichtung einen zu transportierenden Behälter stabil greift oder wieder freigibt. Unter anderem abhängig von der Größe des Trägerrings, insbesondere dessen Radius, kann eine maximale Anzahl von Greifeinrichtungen auf dem Trägerring befestigt werden. Dabei versteht es sich von selbst, dass der Trägerring auch ein- oder mehrstückig als Trägerplatte ausgebildet sein kann. Ebenfalls ist die Anzahl der Greifeinrichtungen auf dem Trägerring sowohl von der Größe der Greifeinrichtungen selbst als auch von der Größe der zu transportierenden Behälter abhängig.

Unter dem Begriff "Trägerring" wird im Zusammenhang mit der vorliegenden Erfindung insbesondere, aber nicht ausschließlich eine kreisförmige oder kreissegmentförmige Platte oder ein Ring verstanden, die bzw. der einen Radius aufweist, welcher ein Vielfaches der Platten-bzw. Ringdicke ist. Ein derartiger Trägerring kann beispielsweise aus Metall, Stahl, Aluminium oder einer Legierung bestehen. Auch möglich ist ein Trägerring aus einem Kunststoff.

Um die Transportvorrichtungen auf neue Betriebsumstände, wie z.B. neue Anlagen oder Behälter mit einer unterschiedlichen Form und/oder Größe, anzupassen, muss unter anderem die Anzahl oder die Art der Greifeinrichtungen geändert bzw. ausgetauscht werden.

Ebenso soll der Austausch von Komponenten der Transportvorrichtungen, wie z.B. Greifarme, Schließ- und Öffnungsmittel sowie Lagerbolzen, und dessen Häufigkeit aufgrund von Komponentenverschleiß geringgehalten bzw. reduziert werden.

Bei den oben genannten Situationen, in denen diese Komponenten ausgetauscht werden müssen, werden die Anlagen gestoppt und die entsprechenden Komponenten händisch ausgetauscht. Diese Betriebsunterbrechungen haben eine negative Auswirkung auf die Wirtschaftlichkeit der Anlagen und sollten daher so kurz wie möglich ausfallen.

Auch hat es sich als Nachteil herausgestellt, dass die im Stand der Technik bekannten Greifeinrichtungen schwer zu reinigen sind. Insbesondere bei der Befüllung von Behältern mit Lebensmitteln oder Arzneimitteln ist auf eine sehr hohe Sauberkeit zu achten, die im Stand der Technik nur durch häufige Reinigungsintervalle erreicht werden kann, welche üblicherweise zumindest teilweise manuell durchgeführt werden müssen.

Es ist daher die Aufgabe der vorliegenden Erfindung, eine Nockensteuerwelle für Greifeinrichtungen zu konzipieren, die ein schnelles und einfaches Montieren der übrigen Komponenten der Greifeinrichtungen ermöglicht und einen geringen Verschleiß aufweist.

Diese Aufgabe wird erfindungsgemäß durch eine Nockensteuerwelle nach Anspruch 1 gelöst. Hierzu ist eine Nockensteuerwelle zur Verwendung als Öffnungs- oder Schließmittel in einer Greifeinrichtung zum Greifen, Halten und Führen von insbesondere flaschenartigen Behältern vorgesehen. Die Nockensteuerwelle weist einen nockenförmigen Steuerabschnitt, einen mittleren Lagerabschnitt, und einen Betätigungsabschnitt auf, wobei der Steuerabschnitt und der Lagerabschnitt auf einer Drehachse liegen. Der Betätigungsabschnitt weist einen Hebel und eine Betätigungsrolle auf, wobei die Betätigungsrolle durch den Hebel zur Drehachse beabstandet angeordnet ist.

Der Hebel mit der Betätigungsrolle kann mittels einer vorstehenden Schiene ausgelenkt bzw. geschwenkt werden, wodurch der Steuerabschnitt gedreht und dadurch das Greifarmpaar geöffnet bzw. geschlossen wird. Im Vergleich zu bekannten Betätigungsabschnitten erreicht dieses Öffnungsmittel eine erhöhte mechanische Robustheit, die insbesondere im hochfrequenten Anlagenbetrieb erwünscht ist, in der mehrere Millionen Flaschen gehalten und transportiert werden. Die Ansteuerung der Betätigungsrolle und somit des Hebels kann mittels einer entsprechend ausgeformten Schiene allmählich, anstelle von ruckartig, erfolgen. Dadurch werden die bei der Ansteuerung beteiligten Komponenten geschont und deren Verschleiß, insbesondere bei schnelldrehenden Klammersternen, reduziert.

Auch wird durch die Verwendung einer Betätigungsrolle ein mechanisch leicht und kostengünstig herzustellendes Bauelement verwendet. Damit ist sowohl die Herstellung sowie der Austausch günstiger im Vergleich zu bekannten Öffnungs- bzw. Schließmitteln für Greifeinrichtungen.

Ein weiterer Vorteil der erfindungsgemäßen Nockensteuerwelle ist ihre Anordnung außerhalb bzw. neben den Greifarmen bzw. dem Greifarmpaar. Das bedeutet, dass die Nockensteuerwelle nicht direkt mit den Greifarmen verbunden ist bzw. wird. Dadurch ist ein Einbau oder Austausch von einem der genannten Komponenten einfacher und unabhängig von den restlichen Komponenten einer Greifeinrichtung. Dies spart Zeit und somit Konstruktions- und Wartungskosten.

Vorteilhafterweise ist der Durchmesser des Steuerabschnitts kleiner oder genauso groß ist wie der Durchmesser des Lagerabschnitts. Dadurch wird die Reinigungsmöglichkeit der Nockensteuerwelle, insbesondere der Greifeinrichtung und der Transportvorrichtung, verbessert, da der Steuerabschnitt nicht über den Lagerabschnitt übersteht und somit zu reinigende Flächen verdeckt.

Ebenso ist es von Vorteil, wenn der Steuerabschnitt, der Lagerabschnitt und/oder der Betätigungsabschnitt, insbesondere der Hebel und/oder Betätigungsrolle, steckbar miteinander verbindbar sind. Durch diese Ausführungsform wird eine modular aufbaubare Nockensteuerwelle erreicht, in der fehlerhafte Bauteile ausgewechselt werden können, ohne dass die gesamte Nockensteuerwelle entsorgt werden muss. Ebenso kann der Lagerabschnitt mit unterschiedlich langen Steuerabschnitten verbunden werden, um somit unterschiedlichen Anforderungen an die Länge der Nockensteuerwelle insgesamt Rechnung tragen zu können, ohne hierfür Sätze von Nockensteuerwellen verschiedener Länge bereithalten zu müssen. Hierdurch werden sowohl Produktionskosten, Lagerkosten, als auch Entsorgungskosten gespart und die Menge an Abfall bei der Produktion wird reduziert.

Vorzugsweise sind der Steuerabschnitt, der Lagerabschnitt und/oder der Betätigungsabschnitt einstückig ausgebildet. Eine derartige Ausführungsform hat den Vorteil, dass diese mittels aus dem Stand der Technik bekannter Spritzgussverfahren oder mittels 3D-Druck kostengünstig gefertigt werden kann. Darüber hinaus wird durch diese Ausführungsform die Stabilität der Nockensteuerwelle erhöht.

Um eine maximale Auslenkung der Greifarme durch die Rotation der Nockensteuerwelle zu ermöglichen, ist der Steuerabschnitt im Querschnitt bikonkav ausgebildet. Zusätzlich können die Greifarme an deren Innenseite Ausbuchtungen aufweisen, die mit den konkaven Vertiefungen in Berührung bzw. Eingriff kommen und somit die maximale Verschwenkung der Greifarme erhöht.

Die Erfindung bezieht sich des Weiteren auf eine Greifeinrichtung zum Greifen, Halten und Führen von Behältern, insbesondere von flaschenähnlichen Behältern, wobei die Greifeinrichtung mindestens ein Greifarmpaar sowie eine zwischen dem Greifarmpaar angeordnete und schwenkbar gelagerte Nockensteuerwelle gemäß den hierin beschriebenen Ausführungsformen aufweist. Die Greifarme sind, insbesondere mittels Lagerbolzen, schwenkbar gelagert bzw. befestigt und können durch die Rotationsbewegung der Nockensteuerwelle in eine Greif- oder Öffnungsposition bewegt werden.

Je nach Größe der zu transportierenden Behälter hat es sich als vorteilhaft erwiesen, wenn eine Vielzahl von übereinander angeordneten Greifarmpaaren in einer Greifeinrichtung vorhanden ist. Dabei weist die Nockensteuerwelle eine entsprechende Länge auf, um die Vielzahl von Greifarmpaaren gleichzeitig anzusteuern. Durch die Verwendung einer Vielzahl von Greifarmpaaren kann der Behälter beim Transport stabilisiert und in einer vorbestimmten Position gehalten werden, wodurch eine fließbandtechnische Weiterbehandlung bzw. Bearbeitung des Behälters mit hoher Wahrscheinlichkeit unproblematisch durchgeführt werden kann.

Die Greifeinrichtung kann derart ausgebildet sein, dass die Nockensteuerwelle an dem ersten Lagerabschnitt und an einem zweiten Lagerabschnitt der Nockensteuerwelle schwenkbar gelagert ist, wobei der Steuerabschnitt zwischen dem ersten und dem zweiten Lagerabschnitt angeordnet ist. Dies ist insbesondere von Vorteil, wenn der Steuerabschnitt eine bestimmte Länge überschreitet und die auf den Steuerabschnitt wirkenden Kräfte durch die Greifarme eine bestimmte Größe überschreiten. Um einen Verschleiß des Steuerabschnitts zu reduzieren, der z.B. durch eine Verbiegung erfolgen kann, ist der Steuerabschnitt an einem unteren Abschnitt und einem oberen Abschnitt (bzw. Lagerabschnitten) gelagert und somit stabilisiert.

Für eine schnelle Anpassung der Greifeinrichtung an die Größe der zu transportierenden Flaschen, ist mindestens das zweite Greifarmpaar gegenüber dem ersten Greifarmpaar höhenverstellbar bzw. -verschiebbar. Die Verschiebung kann entlang gemeinsamer Lagerbolzen der Greifarmpaare oder über eine weitere Montageposition, wie z.B. einem weiteren Trägerring für das zweite Greifarmpaar, die höhenverstellbar ist, erfolgen. Dadurch werden die Montage- und Ausfallzeit der Anlage und somit die Kosten reduziert.

Die vorliegende Erfindung bezieht sich ebenfalls auf eine Transportvorrichtung zum Transportieren von Behältern mit einer oder mehreren wie zuvor beschriebenen Greifeinrichtungen.

Dabei weist die Transportvorrichtung einen Trägerring, eine oder mehrere Ringstreben und einen Trägerwellenaufsatz vorzugsweise auf, wobei die Greifeinrichtungen konzentrisch auf dem Trägerring befestigt sind. Diese skeletförmige Konstruktion ist leicht und spart Material und die damit verbundenen Kosten. Zusätzlich erlaubt sie einen besseren Zugang zu den zahlreichen Greifeinrichtungen, um diese zu montieren oder gegebenenfalls auszutauschen.

Vorzugsweise ist die Transportvorrichtung mit einer Höhenverstellvorrichtung zum Höhenverstellen eines oder mehrerer Greifarmpaare der Greifeinrichtung/en ausgestattet. Die Höhenverstellung kann manuell, elektrisch, hydraulisch und/oder pneumatisch betrieben werden und erleichtert die Anpassung der Höhe der Greifarmpaare.

Weitere Vorteile ergeben sich aus den folgenden Merkmalen, die alternativ oder zusätzlich zu den zuvor genannten Merkmalen bei vorteilhaften Ausführungsformen ausgebildet sein können:
Die Betätigungsrolle kann rotierbar an dem Hebel angeordnet bzw. befestigt sein. Dadurch wird ein einseitiger Abrieb und Verschleiß der Rolle beim Kontakt mit einem Betätigungsmittel wie z.B. einer Schiene vermieden. Die Rolle kann insbesondere auf den Hebel steckbar und somit leicht austauschbar sein.

Die Betätigungsrolle ist vorzugsweise zylinderförmig, kann aber auch oval oder kreisrund geformt sein. Durch die punktuelle Berührung mit einem Betätigungsmittel der Transportvorrichtung wird die Abnutzung der Rolle reduziert.

Der Hebel ist vorzugsweise senkrecht zur Drehachse der Nockensteuerwelle ausgebildet, um eine maximale Hebelkraft bzw. -wirkung des Betätigungsmittels auf die Rolle zu ermöglichen. Dadurch kann eine auf die Nockensteuerwelle von den Greifarmen wirkende Kraft besser bzw. leichter überwunden und ein Verschleiß der sich berührenden Komponenten reduziert werden.

Der Hebel und/oder die Rolle, insbesondere deren Länge und/oder Radius, sind insbesondere derart konzipiert, dass die Außenfläche/-seite der Rolle nicht die Drehachse der Nockensteuerwelle bzw. des Steuerabschnitts und des Lagerabschnitts schneidet.

Die Transportvorrichtung ist vorzugsweise mit einem Betätigungsmittel zum Ansteuern der Betätigungsrolle der Nockensteuerwelle ausgestattet. Dieses Betätigungsmittel ist stationär gegenüber der Drehbewegung der Transportvorrichtung befestigt. Dabei ist das Betätigungsmittel insbesondere als Schiene ausgebildet, die mit der Form ihrer Außenseite die Betätigungsrolle entsprechend auslenkt.

Es wird darauf hingewiesen, dass die hierhin einzeln beschriebenen Merkmale der Nockensteuerwelle, der Greifeinrichtung und der Transportvorrichtung miteinander kombiniert werden können.

Die nachfolgend beschriebenen Figuren beziehen sich auf eine Transportvorrichtung mit mehreren Greifeinrichtungen, die jeweils eine Nockensteuerwelle als bevorzugtes Ausführungsbeispiel aufweisen, wobei diese Figuren nicht als Einschränkung, sondern im Wesentlichen der Veranschaulichung der Erfindung dienen. Elemente aus unterschiedlichen Figuren, aber mit denselben Bezugszeichen sind identisch; daher ist die Beschreibung eines Elements aus einer Figur für gleichbezeichnete bzw. gleichnummerierte Elemente aus anderen Figuren auch gültig. Es zeigen:
- Figur 1: eine perspektivische Ansicht von oben auf die Transportvorrichtung;
- Figur 2: eine perspektivische Ansicht von unten auf die Transportvorrichtung von Fig. 1;
- Figur 3: eine Ansicht auf die Oberseite der Transportvorrichtung von Fig. 1;
- Figur 4: eine Seitenansicht auf die Transportvorrichtung von Fig. 1; und
- Figur 5: eine Ansicht auf die Unterseite der Transportvorrichtung von Fig. 1.

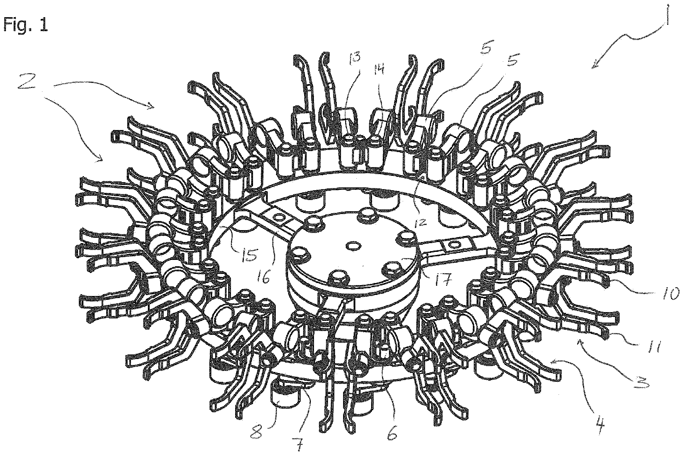

Figur 1 zeigt eine Draufsicht auf eine erfindungsgemäße Transportvorrichtung 1 bzw. Klammerstern. Die Transportvorrichtung 1 weist einen Trägerring 15 auf, der mittels dreier Ringstreben 16 an einem Trägerwellenaufsatz 17 befestigt ist. Der Trägerring 15, die Ringstreben 16 und mindestens ein Teil des Trägerwellenaufsatzes 17 sind insbesondere einteilig ausgebildet. Der Trägerwellenaufsatz 17 bildet den Mittelpunkt der Transportvorrichtung 1 und ist auf einer Welle (nicht dargestellt) befestigbar, damit die Transportvorrichtung 1 und somit der Trägerring 15 mit den darauf montierten Greifeinrichtungen 2 rotiert werden kann. Die zahlreichen Greifeinrichtungen 2 sind auf dem Trägerring 15 befestigt und konzentrisch um den Mittelpunkt bzw. Rotationsachse der Transportvorrichtung 1 angeordnet. Dabei sind die Greifeinrichtungen 2, insbesondere die Greifarme 3, 4, nach außen gerichtet, um Behälter an der Außenumfangsseite der Transportvorrichtung 1 aufnehmen zu können. Jede Greifeinrichtung 2 wird durch ein Greifarmpaar bzw. einen ersten und einen zweiten Greifarm 3, 4 und ein Öffnungsmittel in Form einer Nockensteuerwelle gebildet. Der erste Greifarm 3 ist gegengleich zum zweiten Greifarm 4 geformt, weshalb jeder Greifarm 3, 4 im Wesentlichen die identischen Komponenten aufweist. Jeder Greifarm 3, 4 ist auf einem Lagerbolzen 13, 14 schwenkbar gelagert, der wiederum in dem Trägerring 15 befestigt ist. Die Lagerbolzen 13, 14 sind parallel zueinander angeordnet. Zusätzlich weist jeder Greifarm 3, 4 einen oberen und einen unteren Greifabschnitt 10, 11 auf. In diesem Fall sind die Greifabschnitte 10, 11 um eine gemeinsame Drehachse schwenkbar, die senkrecht zur Schwenk-/Lagerachse des Greifarms 3 bzw. zur Rotationsachse der Transportvorrichtung 1 ist. Als Schließmittel ist im Greifarm 3, 4 ein Magnet angeordnet, der mit dem Magneten des in der gleichen Greifeinrichtung 2 gegenüberliegenden Greifarms anziehend polarisiert ist. Die Nockensteuerwelle ist konzipiert, die Greifarme 3, 4 entgegen der anziehenden Magnetkraft auseinander zu drücken und somit die Greifeinrichtung 2 zu öffnen bzw. in die Öffnungsstellung zu bringen. Jeder Greifarm 3, 4 weist einen Verzahnungsabschnitt mit mehreren Zähnen auf, die mit dem Verzahnungsabschnitt des gegengleich ausgebildeten Greifarms in Eingriff steht. Durch die ineinandergreifenden Zähne wird eine Verzahnung 12 gebildet, wodurch die Schwenkbewegung der Greifarme 3, 4 einer Greifeinrichtung 2 synchronisiert und die Auslenkung der beiden Greifarme 3, 4 bzw. die Winkelgröße der Auslenkung gleichgroß gehalten wird. Zum Öffnen der Greifarme 3, 4 ist die Nockensteuerwelle vorgesehen, die aus einem bikonkaven Steuerabschnitt 6, einem Lagerabschnitt und einem Betätigungsabschnitt mit Hebel 7 und Betätigungsrolle 8 gebildet wird. Der Steuerabschnitt 6 ist derart positioniert, dass er eine Kraft auf den Greifarm 3, 4 zwischen dem Magneten 5 und der Lagerachse 13, 14 wirken kann. Der Lagerabschnitt ist in dem Trägerring 15 angeordnet und darin schwenkbar gelagert. Zusätzlich kann er dazu ausgelegt sein, ein Herausfallen der Nockensteuerwelle aus dem Trägerring 15 zu verhindern. Der Lagerabschnitt und der Steuerabschnitt 6 weisen eine gemeinsame und konzentrisch angeordnete Drehachse auf, um eine stetige und zentrierte Rotation bzw. Schwenkung der Nockensteuerwelle zu gewährleisten (das bedeutet im Wesentlichen ohne Unwucht). An der Unterseite des Lagerabschnitts ist der Betätigungsabschnitt ausgebildet, der einen senkrecht zur Drehachse abgehenden bzw. angeordneten Hebel 7 mit Betätigungsrolle 8 aufweist. Die Rolle 8 ist insbesondere rotierbar und durch einen Eingriff mit einem Betätigungsmittel (nicht dargestellt), insbesondere in Form einer Schiene, auslenkbar. Diese Auslenkung wird vom Hebel an den Lagerabschnitt und an den Steuerabschnitt 6 weitergegeben, wodurch die Nockensteuerwelle das Greifarmpaar 3, 4 öffnet. Je nach Position der Nockensteuerwelle gegenüber dem Greifarmpaar 3, 4 kann es auch als Schließmittel dienen. In diesem Fall müssten die Greifarme 3, 4 ein verlängertes Endstück nach den Lagerbolzen 13, 14 aufweisen, auf die die Nockensteuerwelle wirken könnte. In diesem Fall bedürfte es dann eines abstoßenden Magnetenpaars 5.

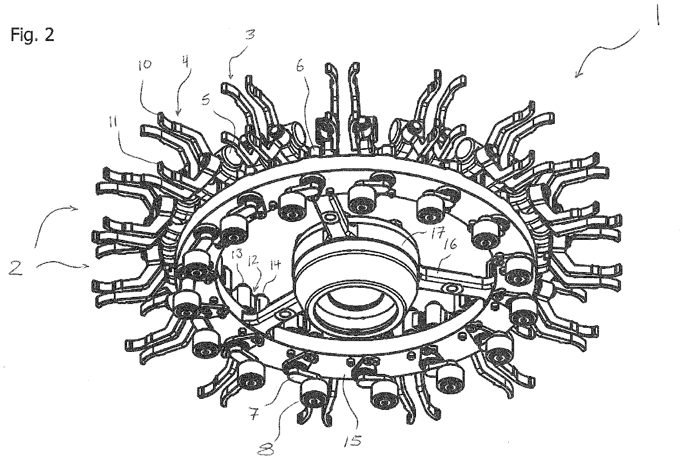

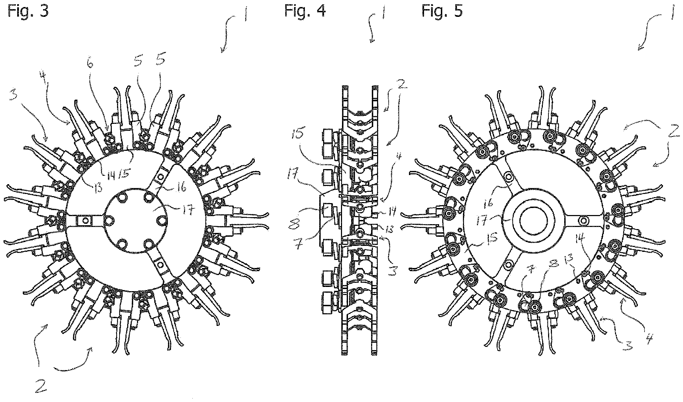

Die übrigen Figuren 2 bis 5 zeigen die selbe Transportvorrichtung aus Fig. 1 mit denselben Komponenten aus unterschiedlichen Blickwinkeln.

### Bezugszeichenliste

1 Transportstern/-vorrichtung bzw. Klammerstern
2 Greifeinrichtung
3 erster Greifarm
4 zweiter Greifarm
5 Magnet (Schließmittel)
6 Nockensteuerwelle (Öffnungsmittel) bzw. Steuerabschnitt
7 Hebel
8 Betätigungsrolle
9 (frei)
10 oberer Greifabschnitt
11 unterer Greifabschnitt
12 Verzahnung
13 erste Lager-/Schwenkachse
14 zweite Lager-/Schwenkachse
15 Trägerring
16 Ringstreben
17 Trägerwellenaufsatz

## Patentansprüche

1. Nockensteuerwelle zur Verwendung als Öffnungs- oder Schließmittel in einer Greifeinrichtung zum Greifen, Halten und Führen von insbesondere flaschenartigen Behältern, mit einem nockenförmigen Steuerabschnitt (6), einem mittleren Lagerabschnitt, und einem Betätigungsabschnitt, wobei der Steuerabschnitt und der Lagerabschnitt auf einer Drehachse liegen,
**dadurch gekennzeichnet, dass**
der Betätigungsabschnitt einen Hebel (7) und eine Betätigungsrolle (8) aufweist, wobei die Betätigungsrolle (8) durch den Hebel (7) zur Drehachse beabstandet angeordnet ist.

2. Nockensteuerwelle nach Anspruch 1,
**dadurch gekennzeichnet, dass**
der Durchmesser des Steuerabschnitts (6) kleiner oder genauso groß ist wie der Durchmesser des Lagerabschnitts.

3. Nockensteuerwelle nach Anspruch 1 oder 2,
**dadurch gekennzeichnet, dass**
der Steuerabschnitt (6), der Lagerabschnitt und/oder der Betätigungsabschnitt, insbesondere der Hebel (7) und/oder Betätigungsrolle (8), steckbar miteinander verbindbar sind.

4. Nockensteuerwelle nach einem der Ansprüche 1 bis 3,
**dadurch gekennzeichnet, dass**
der Steuerabschnitt (6), der Lagerabschnitt und/oder der Betätigungsabschnitt einstückig ausgebildet sind.

5. Nockensteuerwelle nach einem der Ansprüche 1 bis 4,
**dadurch gekennzeichnet, dass**
der Steuerabschnitt (6) im Querschnitt bikonkav ausgebildet ist.

6. Greifeinrichtung (2) zum Greifen, Halten und Führen von Behältern, insbesondere von flaschenähnlichen Behältern,
**gekennzeichnet durch**
mindestens ein Greifarmpaar sowie eine zwischen dem Greifarmpaar angeordnete und schwenkbar gelagerte Nockensteuerwelle nach einem der Ansprüche 1 bis 5.

7. Greifeinrichtung (2) nach Anspruch 6,
**gekennzeichnet durch**
eine Vielzahl von übereinander angeordneten Greifarmpaaren, wobei die Nockensteuerwelle eine Länge aufweist, um die Vielzahl von Greifarmpaaren gleichzeitig anzusteuern.

8. Greifeinrichtung (2) nach Anspruch 7,
**dadurch gekennzeichnet, dass**
die Nockensteuerwelle an dem ersten Lagerabschnitt und an einem zweiten Lagerabschnitt schwenkbar gelagert ist, wobei der Steuerabschnitt zwischen dem ersten und dem zweiten Lagerabschnitt ausgebildet ist.

9. Greifeinrichtung (2) nach Anspruch 7 oder 8,
**dadurch gekennzeichnet, dass**
mindestens das zweite Greifarmpaar gegenüber dem ersten Greifarmpaar höhenverstellbar bzw. -verschiebbar ist.

10. Transportvorrichtung (1) zum Transportieren von Behältern mit einer oder mehreren Greifeinrichtungen (2) nach einem der Ansprüche 6 bis 9.

11. Transportvorrichtung (1) nach Anspruch 10,
**gekennzeichnet durch**
einen Trägerring (15), mehrere Ringstreben (16) und einen Trägerwellenaufsatz (17), wobei die Greifeinrichtungen konzentrisch auf dem Trägerring (15) befestigt sind.

12. Transportvorrichtung (1) nach Anspruch 10 oder 11,
**gekennzeichnet durch**
eine Höhenverstellvorrichtung zum Höhenverstellen eines oder mehrerer Greifarmpaare der Greifeinrichtung/en.

13. Transportvorrichtung (1) nach einem der Ansprüche 10 bis 12,
**gekennzeichnet durch**
eine Betätigungsschiene zum Ansteuern, insbesondere Auslenken, der Betätigungsrolle der Nockensteuerwelle und damit zum Schwenken der Nockensteuerwelle.
